# FASCICULE DE BREVET EUROPEEN

(11) **EP 0 919 588 B1**
(45) Date de publication et mention de la délivrance du brevet: **10.09.2003**
(21) Numéro de dépôt: 98402899.3
(22) Date de dépôt: 20.11.1998
(51) Int. Cl.: C08K 5/521, C08K 5/5398, C08L 95/00

(54) **Emulsions bitumineuses, leur procédé de fabrication et leurs utilisations**
Bitimineuse Emulsionen, Verfahren zu deren Herstellung und ihre Verwendung
Bituminous emulsions, method for producing the same and their uses

(30) Priorité: 28.11.1997 FR 9715015
(43) Date de publication de la demande: 02.06.1999
(73) Titulaire: TOTAL RAFFINAGE DISTRIBUTION S.A., 92800 Puteaux (FR)
(72) Inventeur: Mariotti, Sophie, 76600 Le Havre (FR)
(74) Mandataire: Jolly, Jean-Pierre

(56) Documents cités:
- US-A- 2 987 410
- US-A- 3 350 321

## Description

La présente invention concerne la formulation d'émulsions aqueuses à base de bitume, utilisées en particulier dans le domaine de l'industrie routière. Elle a plus particulièrement pour objet une émulsion bitumineuse présentant des propriétés améliorées d'adhésivité et de stabilité au stockage, grâce à l'incorporation d'un nouvel additif ou " dope " dans le bitume.

Dans le domaine de l'industrie routière, deux techniques de préparation d'enrobés bitumineux coexistent : les techniques dites " à chaud ", dans lesquelles les granulats utilisés sont chauffés en vue ce leur enrobage, et les techniques à base d'émulsions, dites " à froid ", qui s'appliquent à des granulats non chauffés, comprenant notamment les enrobés denses, semi-denses, ouverts, graves émulsions, les enrobés coulés à froid et les enduits superficiels. L'intérêt de ces dernières techniques réside dans le fait qu'elles ne nécessitent pas de chauffage des granulats, qu'elles s'accommodent de granulats humides et qu'elles sont plus économiques que les techniques à chaud . C'est dans ce domaine technique que se situe l'invention.

Les émulsions aqueuses composées principalement de bases bitumes ou liants hydrocarbonés peuvent se présenter sous trois formes: cationiques, anioniques ou non-ioniques, en fonction de la nature chimique des émulsifiants utilisés, qui sont ajoutés à la phase aqueuse.

Les émulsions aqueuses de bitume doivent présenter des propriétés d'adhésivité, de stabilité au stockage et une rupture contrôlée; en particulier, lors de leur utilisation comme enduits superficiels dans l'industrie routière, en répandage sur une couche de granulats, leur adhésivité exprime l'aptitude à l'enrobage de la surface des granulats par un film de bitume. Pour répondre à ces exigences, l'ajout de différents dopes directement aux bases bitumes ou liants est bien connu dans l'état de la technique.

Les additifs couramment utilisés jusqu'à présent, sont des acides gras, ou des dérivés d'acides gras, notamment des brais d'acides gras ou des poix de tall oil, utilisés à des taux pouvant aller jusqu'à 5% en poids par rapport au liant, et qui permettent d'améliorer principalement l'adhésivité et la stabilité au stockage des émulsions finales obtenues.

Entre autres, ont été essayés des acides gras polymérisés, tels que des dimères et trimères d'acides gras insaturés, dont l'utilisation dans des compositions de bitume émulsionable est décrite dans la demande de brevet EP-A-0 416 682. Ces additifs conduisent à des performances techniques des liants et émulsions comparables à celles obtenues avec les dérivés d'acide gras.

Par ailleurs, est décrite dans la demande de brevet WO 96/16128 l'utilisation comme dope du bitume, dans des compositions de bitume en émulsion, de dérivés d'anhydride succinique, qui améliorent sensiblement les propriétés de rupture de ces émulsions.

Des dérivés d'amine ont également été testés, mais qui ne permettent pas d'améliorer de façon satisfaisante l'adhésivité des liants et des émulsions.

Enfin, US-A-5 137 572 décrit un procédé de fabrication d'un émulsifiant utilisé dans des émulsions de bitume mélangées à des granulats, comprenant la réaction d'une mole d'un acide gras,ou d'un acide résinique de tall oil, ou d'un alcool gras, avec 25 à 100 moles d'un oxyde hydrocarboné tel qu'un oxyde d'éthylène ou de propylène, et avec une mole d'acide phosphorique. Cet émulsifiant est utilisé de façon conventionnelle en mélange avec de l'eau, pour obtenir une émulsion cationique ou anionique, qui est ensuite mélangée avec le bitume, et non comme dope du bitume. Ce document décrit, en outre, dans ses exemples de réalisation, des formules d'émulsifiant dont les chaînes comprennent au moins 25 moles et, de préférence, 75 moles d'oxyde d'éthylène, de façon à améliorer la vitesse de rupture de l'émulsion.

Tous ces additifs connus améliorent dans une certaine mesure les performances des émulsions, sans toutefois permettre d'atteindre un niveau optimal, par suite d'une adhésivité insuffisante sur certains types de granulats réputés difficiles, ou d'une rupture fluctuante de l'émulsion.

La Demanderesse a établi que l'introduction d'additifs ou dopes du type esters phosphoriques ou thiophosphoriques dans les liants à base de bitume, permet, de façon surprenante, d'améliorer très fortement l'adhésivité de ces liants et des émulsions obtenues à partir de ceux-ci, par rapport aux autres additifs utilisés habituellement, tout en conservant des émulsions satisfaisantes en qualité, et avec une vitesse de rupture bien maîtrisée.

La présente invention a par conséquent pour objet une émulsion bitumineuse aqueuse présentant de bonnes propriétés d'adhésivité et de stabilité au stockage, caractérisée en ce que la phase bitume comprend un additif ou dope qui est un composé de la famille des esters phosphoriques ou thiophosphoriques, dont la formule développée est la suivante : 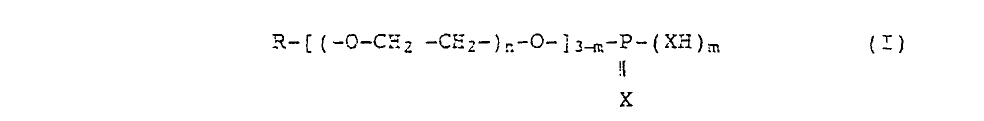 dans laquelle : X est un atome d'oxygène ou de soufre ; m = 0, 1 ou 2 ; n = 0 ou un nombre entier allant de 1 à 10 ; et R est une chaîne hydrocarbonée constituée soit d'un groupe alkyl du type CₓH₂ₓ₊₁, soit d'un groupe alkylène du type CₓH₂ₓ₋₁, avec x compris entre 13 et 20, soit d'un groupe phényl, soit encore de l'un des groupes précédents substitués.

De manière avantageuse, l'additif est un ester phosphorique ou thiophosphorique du type mono ou di-ester d'un alcool gras, ou un mélange de ces deux esters.

De préférence, la ou les chaîne(s) hydrocarbonée(s) de l'ester posséde(nt) un nombre n de groupes éthoxyle, compris entre 3 et 6.

Plus particulièrement, au moins une des chaînes hydrocarbonées de l'ester comprend de préférence de 15 à 18 atomes de carbone.

Selon un mode de mise en oeuvre particulier de l'invention, l'additif est un ester phosphorique possèdant un indice d'acide compris entre 90 et 240 et un point d'éclair (mesuré selon la norme NFM 07-019, en vase clos) compris entre 200 et 230° C.

Plus particulièrement, l'ester phosphorique est utilisé à des taux inférieurs à 1% et de préférence compris entre 0,1 et 0,5 % en poids, par rapport à la base bitume.

La base bitume utilisée, de type connu en soi, est de préférence un mélange de base dure et de base molle, dont la pénétrabilité (en 1/10 de mm, mesurée à 25°C, selon la norme NFT 66004) est comprise entre 180/220 et 35/50, et qui représente entre 59 et 70 % en poids de l'émulsion.

Ces bases bitumes, d'obtention classique, sont issues du pétrole brut, des schistes bitumineux, d'huiles lourdes, de sables bitumineux, etc, ou même dérivées de produits charbonniers. La base bitume peut être par exemple :
a) la fraction la plus lourde obtenue par distillation directe sous pression atmosphérique ou sous pression réduite du pétrole brut ;
b) la phase lourde obtenue par désasphaltage au solvant d'une fraction lourde obtenue selon a) ;
c) le produit de l'oxydation, en présence ou non de catalyseurs, d'une fraction lourde selon a) ou d'une phase lourde selon b) ;
d) le produit de l'oxydation, en présence ou non de catalyseurs, d'un mélange d'une fraction lourde selon a) ou d'une phase lourde selon b) et d'un distillat, ou d'un extrait aromatique, ou d'un brai de désasphaltage ;
e) un mélange d'un produit oxydé obtenu selon b) ou c), ou d'une base dure, et d'un distillat, ou d'une huile désasphaltée, ou d'un extrait aromatique, ou d'un brai de désasphaltage, ou d'une fraction lourde selon a) ou d'une phase lourde selon b), ou d'une base de conversion .

L'émulsion, selon l'invention, présente une adhésivité passive (mesurée selon la norme NFT 66-018) avec des granulats du type Diorite Meilleraie, de 100/100, une stabilité au stockage ASTM 7 jours (mesurée selon la norme ASTM D244) inférieure à 15 % en masse et un indice de rupture (mesuré selon la norme NFT 66 019) d'environ 50 g/100 g d'émulsion.

Un deuxième objet de la présente invention est un procédé de préparation d'une telle émulsion bitumineuse, caractérisé en ce que l'on procède au mélange, d'une part, d'une base bitume avec un composé ce la famille des esters phosphoriques ou thiophosphoriques, à une température supérieure à 140 °C, et d'autre part, d'un émulsifiant dans une phase aqueuse, à une température d'environ 50 °C, et en ce que l'on introduit et traite ensuite les deux mélanges dans une émulsionneuse du type mélangeur statique ou turbine, de façon à obtenir une émulsion finale homogène et stable.

L'invention a enfin pour objet l'utilisation de l'émulsion décrite ci-dessus, dans le domaine de l'industrie routière, dans les techniques dites "à froid", en particulier pour la réalisation d'enduits superficiels ou de couches d'accrochage diverses ou pour les traitements de sols.

D'autres caractéristiques et avantages de l'invention ressortiront des exemples comparatifs de mise en oeuvre, qui seront décrits ci-après.

On va rappeler au préalable les propriétés qui sont retenues et utilisées pour évaluer les performances techniques des émulsions de bitume.

La propriété fondamentale est l'adhésivité passive, qui est mesurée selon la norme NFT 66-018. Elle caractérise la résistance au désenrobage du granulat par le bitume en présence d'eau, et elle s'exprime par une note correspondant au pourcentage de surface d'un granulat de référence recouverte d'un film du bitume. Cette mesure s'effectue sur un échantillon spécifique de granulats lavés et séchés, comprenant :
- de la diorite Meilleraie,
- de la quartzite Vignat,
- du calcaire du Boulonnais,
- du silex de Sologne.

Si le granulat est entièrement recouvert de bitume, l'adhésivité est égale à 100; si le bitume est séparé du granulat, elle est égale à 0.

Dans son principe, cette mesure consiste à malaxer un mélange d'émulsion et de granulat type. Après rupture complète de l'émulsion dans des conditions déterminées, le mélange est immergé dans de l'eau placée dans un récipient en verre. On apprécie immédiatement d'une manière visuelle le pourcentage de surface recouverte d'un film de liant ; si la note obtenue est supérieure ou égale à 90, on continue l'essai, en laissant reposer le récipient à 60 °C pendant 24 h, avant de refaire une nouvelle appréciation de la surface ; on obtient donc deux notes, par exemple 90/90.

On peut mesurer également la stabilité thermique de l'émulsion, dite stabilité ASTM 7 jours, mesurée selon la norme ASTM D244: elle s'exprime en % en masse de l'émulsion qui a subi une décantation après 7 jours de stockage .

Pour les émulsions, un autre critère important est la détermination de leur indice de rupture, respectivement selon la norme NFT 66-017, pour les émulsions cationiques, et la norme NFT 66-019, pour les émulsion anioniques.

Cette mesure consiste à évaluer la rupture d'une émulsion vis-à-vis de fines minérales de référence, qui sont des fines siliceuses (teneur en SiO₂ supérieure à 98%) ayant une granulométrie déterminée. Dans ce but, on introduit régulièrement, suivant un mode opératoire conventionnel, la quantité de fines qui provoque la rupture de 100 g d'émulsion. L'indice de rupture est exprimé en gramme de fines par 100 grammes d'émulsion. Plus la valeur est faible, plus la vitesse de rupture est élevée. A titre d'exemple, on estime qu'une émulsion pour enrobés coulés à froid, dont l'indice de rupture est supérieur à 100, a une vitesse de rupture que l'on qualifie de lente.

D'autres caractéristiques des émulsions, qui seront évoquées dans les exemples décrits ci-après, sont leur concentration (teneur en liant en %), la quantité de dépôts sur tamis de 630µm (en %), mesurée selon la norme NFT 66-016, qui caractérise la bonne mise en émulsion, ainsi que leur viscosité cinématique ou pseudo-viscosité Engler, mesurée selon la norme NFT 66-020.

On peut également mesurer l'adhésivité passive du liant, avant qu'il ne soit mis en émulsion, en utilisant la norme NFT 66-018 modifiée.

Les exemples suivants de mise en oeuvre illustrent la présente invention sans aucunement la limiter.

### Exemples 1 à 6

Une première série d'essais comparatifs, regroupant différentes formulations de liants et présentant les caractéristiques des émulsions correspondantes obtenues, est illustrée par les Exemples 1 à 6.

Cette série d'essais a été réalisée à partir de deux liants de bitume dénommés bases molles BM1 et BM2, obtenus respectivement à partir de formulations de résidus ce pétroles bruts d'origine du Moyen-Orient, et classés 180/220 en fonction de leur caractéristique de pénétrabilité à 25 °C, mesurée en 1/10 de mm, selon la norme NFT 66-004 (Exemples 1 et 4).

Ces liants ont été dopés d'une part par des brais d'acide gras, référencés BAG, à des taux respectifs de 2,4 et 2,3 % en poids par rapport au liant (Exemples 2 et 5), et d'autre part, selon l'invention, par un premier composé dérivé d'ester phosphorique, référencé " dope 1 ", à un taux de 0,2 % en poids du liant (Exemples 3 et 6). Ce composé est un diester éthoxylé conforme à l'invention, qui répond à la formule chimique développée (I) ci-dessus, avec X= O, m =1, n =3 ou 4, R étant un groupe phényl substitué par différents iso-C₉H₁₉. Il a un indice d'acide compris entre 89 et 98 (mesuré selon la méthode TOTAL 507), et un point d'éclair (mesuré selon la norme NFM 07-019-vase clos) de 230°C.

Les valeurs obtenues pour les différentes caractéristiques significatives des émulsions ainsi réalisées sont rassemblées dans le Tableau I ci-après.

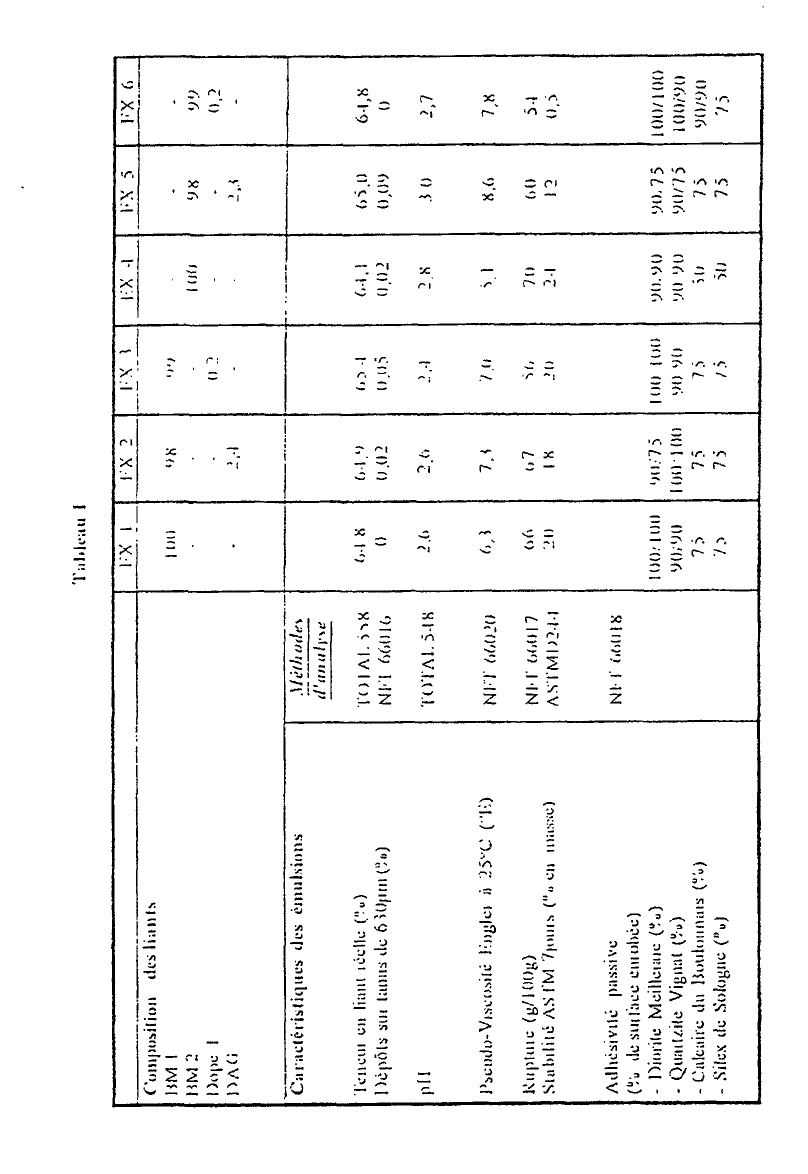

On constate que l'emploi de l'additif conforme à l'invention, à des taux de 0,2 % en poids par rapport à la base bitume, augmente sensiblement le niveau d'adhésivité de l'émulsion dans le cas du liant BM2, et très nettement la stabilité au stockage, par rapport aux dopes traditionnels comme les dérivés d'acides gras. En outre, la vitesse de rupture de l'émulsion est fortement augmentée, l'indice de rupture étant réduit de 6 à 11 points, suivant la nature de la base bitume utilisée, pour un taux de 0,2 % d'additif. Par ailleurs, les autres caractéristiques des émulsions sont satisfaisantes.

### Exemples 7 à 14

Une deuxième série d'essais comparatifs, regroupant différentes formulations de liants et analysant les caractéristiques des émulsions correspondantes obtenues, est illustrée par les Exemples 7 à 14.

Cette série d'essais a été réalisée à partir des mêmes liants de bitume, dénommés bases molles BM1 et BM2, que dans la première série d'essais (Exemples 7 et 10), ainsi qu'avec une troisième base molle BM3 (Exemple 13).

Ces liants ont été dopés, d'une part, par des brais d'acide gras (BAG) à des taux respectifs de 2,4 et 2,3 % en poids par rapport au liant (Exemples 8 et 11) et, d'autre part, selon l'invention, par un deuxième composé dérivé d'ester phosphorique conforme à l'invention, référencé " dope 2 ", à des taux de 0,2 % en poids du liant (Exemples 9, 12 et 14). Ce composé est un mélange d'un monoester phosphorique éthoxylé, qui répond à la formule chimique développée (I) ci-dessus, avec X= O, m=2, n=5, R étant un groupe alkylène tel que C₁₈H₃₅, et d'un diester phosphorique (la seule différence dans la formule étant que m =1). Il a un indice d'acide compris entre 230 et 236 (mesuré selon la méthode TOTAL 507), et un point d'éclair, mesuré selon la norme NFM 07-019 (vase clos) de 206°C.

Les valeurs obtenues pour les différentes caractéristiques significatives des émulsions ainsi réalisées sont rassemblées dans le Tableau II ci-après.

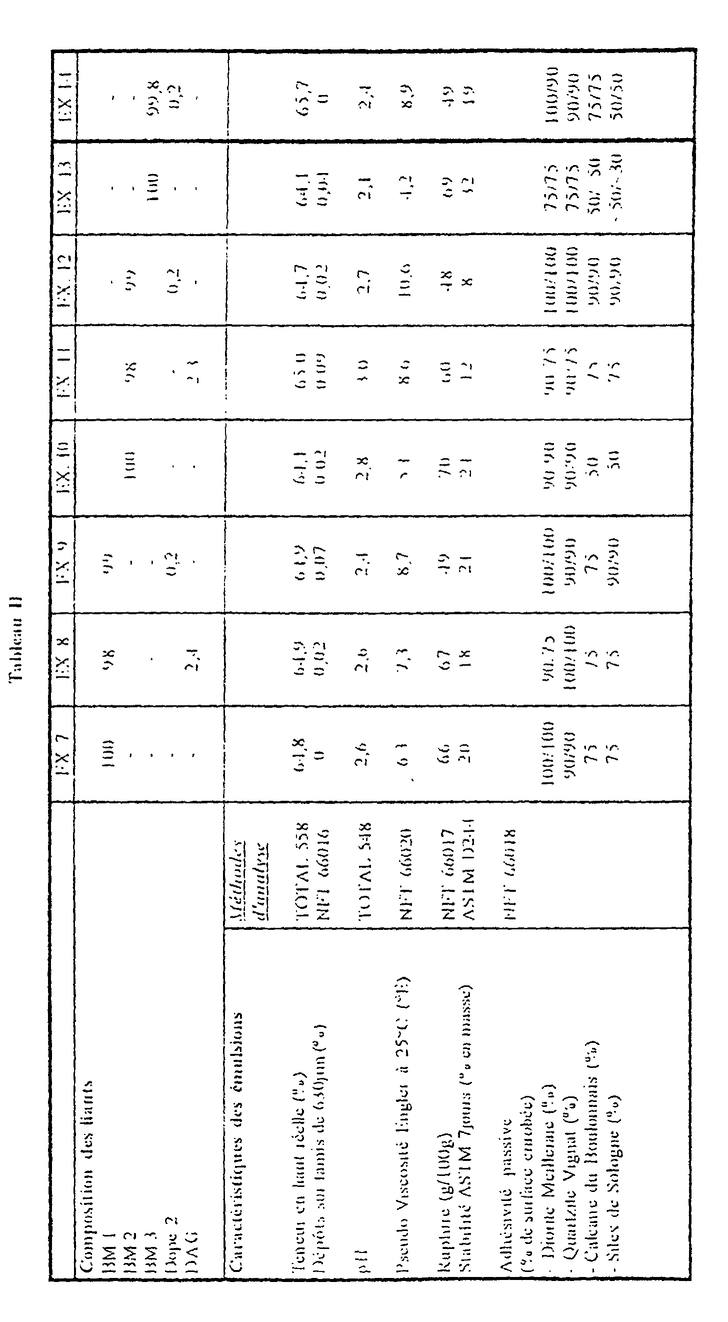

On constate que l'emploi de l'additif conforme à l'invention, à des taux de 0,2 % en poids par rapport à la base bitume, augmente à nouveau sensiblement le niveau d'adhésivité de l'émulsion, quel que soit le type de liant, et très nettement la stabilité au stockage, par rapport aux dopes traditionnels comme les brais d'acides gras (BAG), dans le cas de la base BM2. En outre, la vitesse de rupture de l'émulsion est fortement augmentée, l'indice de rupture étant réduit de 12 à 18 points, par rapport aux mêmes bases dopées avec des dérivés d'acide gras, suivant la nature de la base bitume utilisée, pour des taux d'additif de 0,2 % par rapport au liant.

Les résultats des essais rapportés ci-dessus montrent donc clairement que des composés de la famille des esters phosphoriques éthoxylés, utilisés comme dopes des liants bitumes, en remplacement des additifs traditionnels, permettent d'améliorer nettement le niveau global d'adhésivité des liants et des émulsions obtenues à partir de ceux-ci, tout en conservant des émulsions satisfaisantes en qualité.

## Revendications

1. Emulsion bitumineuse aqueuse présentant de bonnes propriétés d'adhésivité et de stabilité au stockage, **caractérisée en ce que** la phase bitume comprend un additif ou dope qui est un composé de la famille des esters phosphoriques ou thiophosphoriques, dont la formule développée est la suivante : 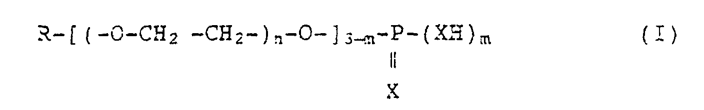 dans laquelle: X est un atome d'oxygène ou de soufre ; m = 0, 1 ou 2 ; n = 0 ou un nombre entier allant de 1 à 10 ; et R est une chaîne hydrocarbonée constituée soit d'un groupe alkyl du type CₓH₂ x +1, soit d'un groupe alkylène du type CₓH₂x-1, avec x compris entre 13 et 20, soit d'un groupe phényl, soit encore de l'un des groupes précédents substitués.

2. Emulsion selon la revendication 1, **caractérisée en ce que** l'additif est un ester phosphorique ou thiophosphorique du type mono ou di-ester d'un alcool gras, ou un mélange des deux esters.

3. Emulsion selon les revendications 1 et 2, **caractérisée en ce que** la ou les chaîne(s) hydrocarbonée(s) de l'ester posséde(nt) un nombre de groupements éthoxyle compris entre 3 et 6.

4. Emulsion selon l'une quelconque des revendications 1 à 3, **caractérisée en ce qu'**au moins une chaîne hydrocarbonée de l'ester comprend de préférence de 15 à 18 atomes de carbone.

5. Emulsion selon l'une des revendications 3 et 4, **caractérisée en ce que** l'additif est un ester phosphorique qui possède un indice d'acide compris entre 90 et 240 et un point d'éclair (mesuré selon la norme NFM 07-019, en vase clos) compris entre 200 et 230° C.

6. Emulsion selon la revendication 5, **caractérisée en ce que** l'ester phosphorique est utilisé à des taux inférieurs à 1 % et, de préférence, compris entre 0,1 et 0,5 % en poids par rapport à la base bitume.

7. Emulsion selon l'une quelconque des revendications précédentes, **caractérisée en ce que** la base bitume utilisée, de type connu en soi, est un mélange de base dure et de base molle, dont la pénétrabilité (en 1/10 de mm, mesurée à 25 °C, selon la norme NFT 66004) est comprise entre 180/220 et 35/50, et dont la teneur est comprise entre environ 59 et 70 % en poids dans l'émulsion.

8. Emulsion selon l'une quelconque des revendications précédentes, **caractérisée en ce qu'**elle présente une adhésivité passive (mesurée selon la norme NFT 66-018), avec des granulats du type Diorite Meilleraie, de 100/100, et une stabilité au stockage ASTM 7 jours (mesurée selon la norme ASTM D244) inférieure à 15 % en masse.

9. Emulsion selon l'une quelconque des revendications précédentes, **caractérisée en ce qu'**elle présente un indice de rupture (mesuré selon la norme NFT 66 019) d'environ 50 g/100 g d'émulsion.

10. Procédé de préparation d'une émulsion bitumineuse selon l'une quelconque des revendications précédentes, **caractérisé en ce que** l'on procède au mélange, d'une part, d'une base bitume avec un composé de la famille des esters phosphoriques ou thiophosphoriques, à une température supérieure à 140 °C, d'autre part d'un émulsifiant dans une phase aqueuse, à une température d'environ 50 °C, et **en ce que** l'on introduit et traite ensuite ces mélange dans une émulsionneuse du type mélangeur statique ou turbine, de façon à obtenir une émulsion finale homogène et stable .

11. Utilisation de l'émulsion selon l'une des revendications 1 à 9, dans le domaine de l'industrie routière, dans les techniques dites "à froid", en particulier pour la réalisation d'enduits superficiels ou de couches d'accrochage diverses, ou pour les traitements de sol.

## Patentansprüche

1. Bituminöse wässrige Emulsion, die gute Adhäsionseigenschaften und eine gute Lagerungsstabilität zeigt, **dadurch gekennzeichnet, daß** die Bitumenphase einen Zusatzstoff oder Dotierstoff umfaßt, welcher eine Verbindung aus der Familie der Phospho- oder Thiophosphoester darstellt, deren Formel sich wie folgt ausdrückt: 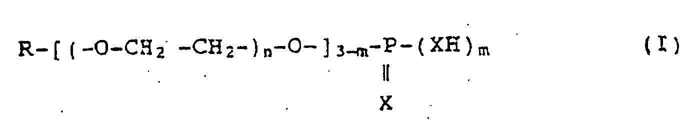 worin: X ein Sauerstoff- oder ein Schwefelatom ist; m = 0, 1 oder 2; n = 0 oder eine ganze Zahl von 1 bis 10; und R eine Kohlenwasserstoffkette ist, die als eine Alkylgruppe vom Typ CₓH₂ₓ₊₁, als eine Alkylengruppe vom Typ CₓH₂ₓ₋₁, wobei x im Bereich von 13 bis 20 liegt, als eine Phenylgruppe oder als eine der vorangehenden Gruppen, die substituiert sind, aufgebaut ist.

2. Emulsion gemäß Anspruch 1, **dadurch gekennzeichnet, daß** der Zusatzstoff ein Phospho- oder Thiophosphoester vom Typ eines Mono- oder Di-Esters eines Fettalkohols oder eine Mischung von beiden Estern ist.

3. Emulsion gemäß Anspruch 1 oder 2, **dadurch gekennzeichnet, daß** die Kohlenwasserstoffkette(n) des Esters eine Anzahl von Ethoxylgruppen im Bereich von 3 bis 6 aufweist (aufweisen).

4. Emulsion gemäß einem der Patentansprüche 1 bis 3, **dadurch gekennzeichnet, daß** wenigstens eine Kohlenwasserstoffkette des Esters vorzusgweise 15 bis 18 Kohlenstoffatome aufweist.

5. Emulsion gemäß einem der Ansprüche 3 und 4, **dadurch gekennzeichnet, daß** der Zusatzstoff ein Phosphoester ist, welcher einen Säurenindex im Bereich von 90 bis 240 und einen Flammpunkt (gemessen nach der Norm NFM 07-019 im geschlossenen Gefäß) zwischen 200 und 230°C aufweist.

6. Emulsion gemäß Anspruch 5, **dadurch gekennzeichnet, daß** der Phosphoester bei Prozentsätzen von weniger als 1 Gewichts-% und vorzugsweise im Bereich von 0,1 bis 0,5 Gewichts-%, bezogen auf die Bitumenbasis, verwendet wird.

7. Emulsion gemäß einem der vorangehenden Ansprüche, **dadurch gekennzeichnet, daß** die an sich bekannte Bitumenbasis eine Mischung einer harten Basis und einer weichen Basis ist, deren Penetrierbarkeit (in 1/10 mm, gemessen bei 25°C gemäß der Norm NFT 66004) im Bereich von 180/220 bis 35/50 liegt und deren Gehalt im Bereich von ungefähr 59 bis 70 Gewichts-% der Emulsion beträgt.

8. Emulsion gemäß einem der vorangehenden Ansprüche, **dadurch gekennzeichnet, daß** sie mit Granulaten vom Typ Diorite Meilleraie eine passive Adhäsion (gemessen gemäß der Norm NFT 66-018) von 100/100 und eine 7-Tage-ASTM-Lagerungsstabilität (gemessen gemäß der Norm ASTM D244) von weniger als 15 Masse-% zeigt.

9. Emulsion gemäß einem der vorangehenden Ansprüche, **dadurch gekennzeichnet, daß** sie einen Bruchindex (gemessen gemäß der Norm NFT 66 019) von ungefähr 50 g/100 g Emulsion zeigt.

10. Verfahren zur Herstellung einer bituminösen Emulsion gemäß einem der vorangehenden Ansprüche, **dadurch gekennzeichnet, daß** man eine Mischung von zum einen Teil einer Bitumenbasis mit einer Verbindung der Familie der Phospho- oder Thiophosphoester bei einer Temperatur von mehr als 140°C und zum anderen Teil eines Emulgators in einer wässrigen Phase bei einer Temperatur von ungefähr 50°C vornimmt, und daß man anschließend die Mischung einführt und behandelt in einem Emulsionsgerät vom Typ eines statischen oder Turbinenmischers, um eine schließlich homogene und stabile Emulsion zu erhalten.

11. Verwendung der Emulsion gemäß einem der Ansprüche 1 bis 9 auf dem Gebiet des Straßenbaus, bei den sogenannten "Kälte"-Techniken, insbesondere zum Bilden von Oberflächenbelägen oder unterschiedlichen Verbindungsschichten, oder für Bodenbehandlungen.

## Claims

1. An aqueous bituminous emulsion having good adhesive power and storage stability properties, **characterised in that** the bitumen phase comprises an additive or dope which is a compound of the family of phosphoric or thiophosphoric esters, the developed formula of which is as follows: 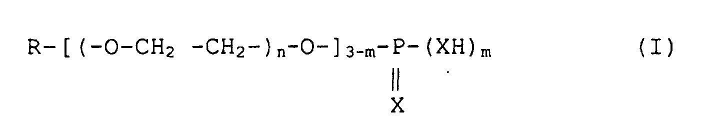 in which: X is an oxygen or sulfur atom; m = 0, 1 or 2;
n = 0 or a whole number between 1 and 10; and R is a hydrocarbon chain consisting either of an alkyl group of the type CₓH₂ₓ₊₁, or an alkylene group of the type CₓH₂ₓ₋₁, with x being between 13 and 20, or of a phenyl group, or of one of the above groups bearing a substituent.

2. An emulsion according to claim 1, **characterised in that** the additive is a phosphoric or thiophosphoric ester of the fatty alcohol mono- or di-ester type, or a mixture of the two esters.

3. An emulsion according to claims 1 and 2, **characterised in that** the hydrocarbon chain(s) of the ester has/have a number of ethoxyl groups between 3 and 6.

4. An emulsion according to any one of claims 1 to 3, **characterised in that** at least one hydrocarbon chain of the ester preferably comprises from 15 to 18 carbon atoms.

5. An emulsion according to one of claims 3 and 4, **characterised in that** the additive is a phosphoric ester which has an acid value between 90 and 240 and a flash point (measured to standard NFM 07-019, in a closed cup) of between 200 and 230°C.

6. An emulsion according to claim 5, **characterised in that** the phosphoric ester is used at rates lower than 1% and, preferably, between 0.1 and 0.5% by weight relative to the bitumen base.

7. An emulsion according to any one of the preceding claims, **characterised in that** the bitumen base used, of a type known per se, is a mixture of hard base and soft base, the penetrability of which (in 1/10 of mm, measured at 25°C, to standard NFT 66004) is between 180/220 and 35/50, and the content of which is between approximately 59 and 70% by weight in the emulsion.

8. An emulsion according to any one of the preceding claims, **characterised in that** it has a passive adhesive power (measured to the standard NFT 66-018), with 100/100 grade Diorite Meilleraie type aggregate, and a 7 day ASTM storage stability (measured to the standard ASTM D244) of less than 15% by weight.

9. An emulsion according to any one of the preceding claims, **characterised in that** it has a cracking index (measured to standard NFT 66 019) of approximately 50 g/100 g of emulsion.

10. A process for preparing a bituminous emulsion according to any one of the preceding claims, **characterised in that**, on the one hand, a bitumen base is mixed with a compound of the family of phosphoric or thiophosphoric esters, at a temperature greater than 140°C, on the other an emulsifier is mixed in an aqueous phase at a temperature of approximately 50°C, and **in that** these mixtures are then introduced and processed in an emulsifying machine of the static mixer or turbine type, in order to obtain a homogeneous and stable final emulsion.

11. Use of the emulsion according to one of claims 1 to 9, in the road-building industry, in "low temperature" techniques, in particular to produce various surface coatings or bonding layers, or for ground treatment.
